# EUROPÄISCHE PATENTSCHRIFT

(11) **EP 1 510 385 B1**
(45) Veröffentlichungstag und Bekanntmachung des Hinweises auf die Patenterteilung: **04.10.2006**
(21) Anmeldenummer: 04011716.0
(22) Anmeldetag: 18.05.2004
(51) Int. Cl.: B60J 5/04

(54) **Tür für ein Kraftfahrzeug**
Door for a vehicle
Porte pour un véhicule

(30) Priorität: 27.08.2003 DE 10339306
(43) Veröffentlichungstag der Anmeldung: 02.03.2005
(73) Patentinhaber: Dr.Ing. h.c.F. Porsche Aktiengesellschaft, 70435 Stuttgart (DE)
(72) Erfinder: Armbruster, Reiner, 75417 Muehlacker (DE); Scholz, Andre, 75446 Wiernsheim (DE); Zimmer, Jens, 71272 Renningen-Malmsheim (DE)

(56) Entgegenhaltungen:
- DE-A- 19 937 000
- GB-A- 2 101 535
- US-A1- 2002 171 260
- US-B1- 6 196 619

## Beschreibung

Die Erfindung bezieht sich auf eine Tür für ein Kraftfahrzeug, die in eine Ausnehmung eine Aufbaus eingesetzt ist, nach dem Oberbegriff des Patentanspruchs 1.

Eine bekannte Tür, GB 2 101 535 A, der eingangs genannten Gattung, weist einen Türkörper auf, der durch ein Innenteil und ein Außenteil gebildet wird. Zwischen aufrechten benachbart einer Türsäule und einer Schlosssäule verlaufenden Rahmen des Türkörpers erstreckt sich eine Aufprallschutzvorrichtung. Die Aufprallschutzvorrichtung besitzt zwei mit Abstand zueinander verlaufende und in Türlängsrichtung ausgerichtete Aufprallträger, die nur mit dem Innenteil des Türkörpers verbunden sind.

In der DE 29 34 278 A1 wird eine Tür für ein Kraftfahrzeug behandelt, bei der ein Außenteil eines Türkörpers aus Kunststoff hergestellt ist. Das einige wesentliche Anbauteile der Tür aufnehmende Außenteil ist durch Verrippungen an seiner Innenseite selbstragend ausgeführt. Die Innenseite ist mittels eines Innenteils abgedeckt.

Es ist Aufgabe der Erfindung eine mit einer Aufprallschutzvorrichtung versehene Tür für ein Kraftfahrzeug zu schaffen, bei der ein Türkörper, umfassend ein Innenteil und ein Außenteil, in Verbindung mit der Aufprallschutzvorrichtung bezüglich der Stoßaufnahme verbessert wird.

Nach der Erfindung wird diese Aufgabe durch die Merkmale des kennzeichnenden Teils des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Zusammenwirken der am Innenteil befestigten Aufprallschutzeinrichtung mit der am Außenteil des Türkörpers angebrachten Stützeinrichtung zu vorbildlichen Stoßaufnahmeeigenschaften der Tür führt. Dabei ist die Stützeinrichtung im Aufbau einfach und lässt sich mit vertretbaren Mitteln in den Türkörper integrieren. Eine besonders funktionsgerechte Konstruktion der Tür wird dadurch erzielt, wenn das Innenteil und das Außenteil des Türkörpers aus hochfestem nichtmetallischem Werkstoff bspw. kohlefaserverstärktem Kunststoff und die Aufprallschutzvorrichtung bzw. zumindest Teile davon aus Metall bestehen. Für die Stützeinrichtung wird ebenfalls Metall eingesetzt. Bei dieser Werkstoffwahl eignet sich für die Verbindung der Stützeinrichtung mit dem Innenteil des Türkörpers vor allem Kleben.

In der Zeichnung wird ein Ausführungsbeispiel der Erfindung gezeigt, das nachstehend näher erläutert wir.

Es zeigen
- Fig. 1: eine Explosionszeichnung der Tür nach der Erfindung,
- Fig. 2: eine Seitenansicht auf das Innenteil der Tür,
- Fig. 3: eine Schrägansicht von vorne auf die Innenseite des Außenteils der Tür,
- Fig. 4: eine Schrägansicht von hinten auf die Innenseite des Außenteils der Tür.

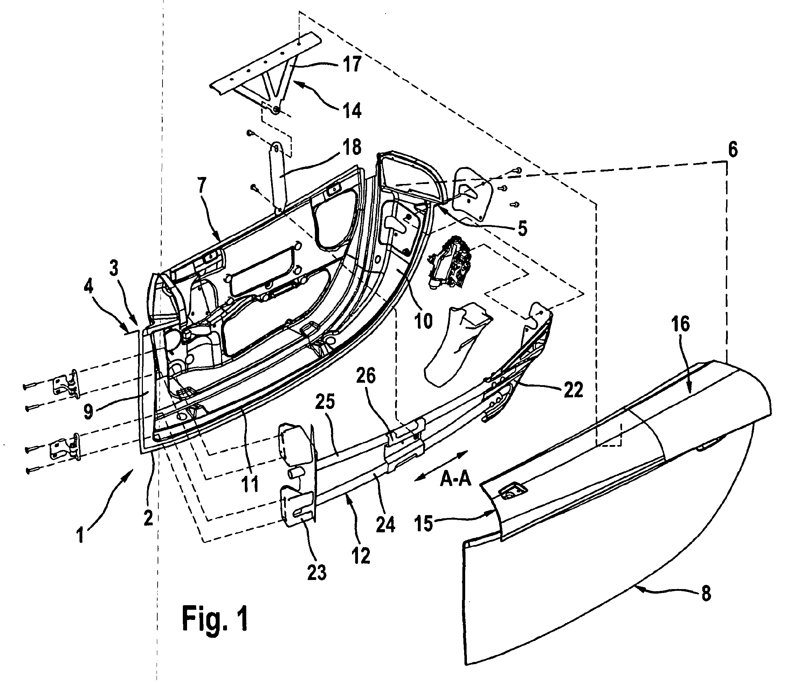

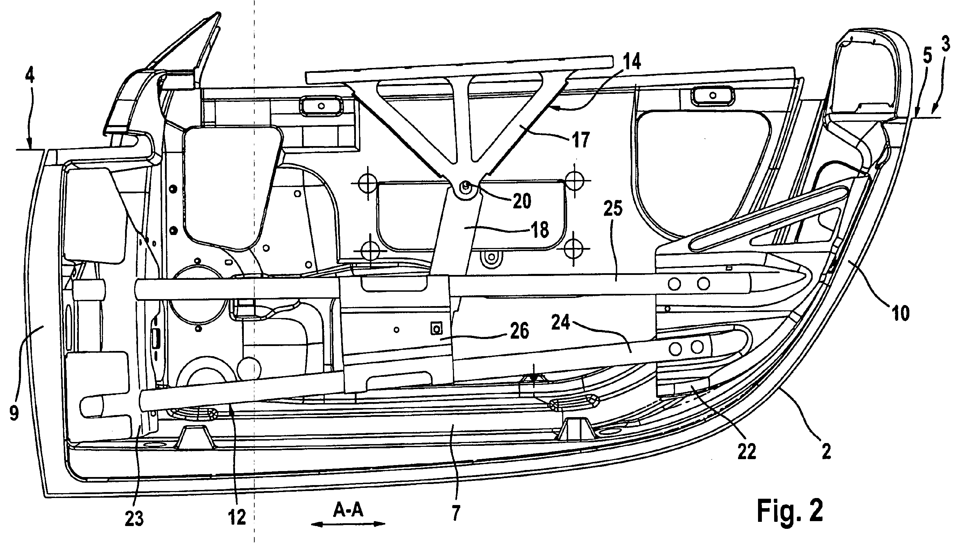

Eine Tür 1 für ein nicht näher dargestelltes Kraftfahrzeug ist in eine Öffnung 2 eines Aufbaus 3 eingesetzt und umfasst einen sich an aufrechten Säulen 4 und 5 - Säule 4 ist eine Scharniersäule; Säule 5 eine Schlosssäule - abstützenden Türkörper 6 -Fig. 1 und 2-. Der Türkörper 6 wird durch ein Innenteil 7 und ein Außenteil 8 gebildet, und er grenzt mit bspw. am Innenteil 7 vorgesehenen Rahmen 9 und 10 an die Säulen 4 und 5 an. Das Innenteil 7 und das Außenteil 8 sind aus nichtmetallischem Werkstoff bspw. kohlefaserverstärktem Kunststoff hergestellt und entlang eines Flansches 11 durch Kleben zusammengefügt. Zwischen den Rahmen 9 und 10 des Innenteils 7 und des Außenteils 8 erstreckt sich in Längsrichtung A-A des Kraftfahrzeugs bzw. der Tür 1 eine Aufprallschutzvorrichtung 12 die nach Art eines Trägers ausgeführt ist.

An einer Innenseite 13 des Außenteils 8 ist zwischen den Rahmen 9 und 10 des Türkörpers 6 eine Stützeinrichtung 14 angeordnet, die mit der Aufprallschutzvorrichtung 12 zusammenwirkt. Hierzu ist das Außenteil 8 mit einer eine etwa eine horizontal verlaufende Wand 15 aufweisenden Brüstung 16 versehen, von der aus die Stützeinrichtung 14 bis zur Aufprallschutzvorrichtung 12 hin sich erstreckt. Die Stützeinrichtung 14 weist eine von der Wand 15 der Brüstung 16 weggeführte Stützkonsole 17 und einen zwischen Stützkonsole 17 und Aufprallschutzvorrichtung 12 wirkenden Stützarm 18 auf; beide bestehen aus Metall, allerdings ist auch denkbar sie aus hochfestem nichtmetallischem Werkstoff herzustellen. Die Stützkonsole 17 ist mit einer an der Wand 15 anliegenden Abwinkelung 19 versehen, die mit besagter Wand 14 der Brüstung 16 durch Kleben verbunden ist. Von der Abwinkelung 19 aus verjüngt sich die Stützkonsole 17 keilförmig d.h. letztere besitzt die Form eines Dreiecks. Darüber hinaus ist der Stützarm 18 unter Zwischenschaltung von Schrauben 20 und 21 mit der Stützkonsole 17 und der Aufprallschutzvorrichtung 12 verbunden.

Die Aufprallschutzvorrichtung 12 weist benachbart der Rahmen 9 und 10 des Türkörpers 6 eine erste Konsole 22 und eine zweite Konsole 23 auf. Zwischen diesen Konsolen 22 und 23 erstrecken sich als Rohre ausgebildete Abstützelemente 24 und 25, die in Höhenrichtung mit Abstand zueinander verlaufen. In einem mittleren Bereich zwischen den Konsolen 22 und 23 sind die Abstützelemente 24 und 25 mit einer Halteplatte 26 untereinander verbunden, an der der Stützarm 18 der Stützeinrichtung 14 angreift. An den Rahmen 9 und 10 des Innenteils 7 sind die Konsolen 22 und 23 der Aufprallschutzvorrichtung 12 durch Schrauben, Kleben oder dgl. befestigt.

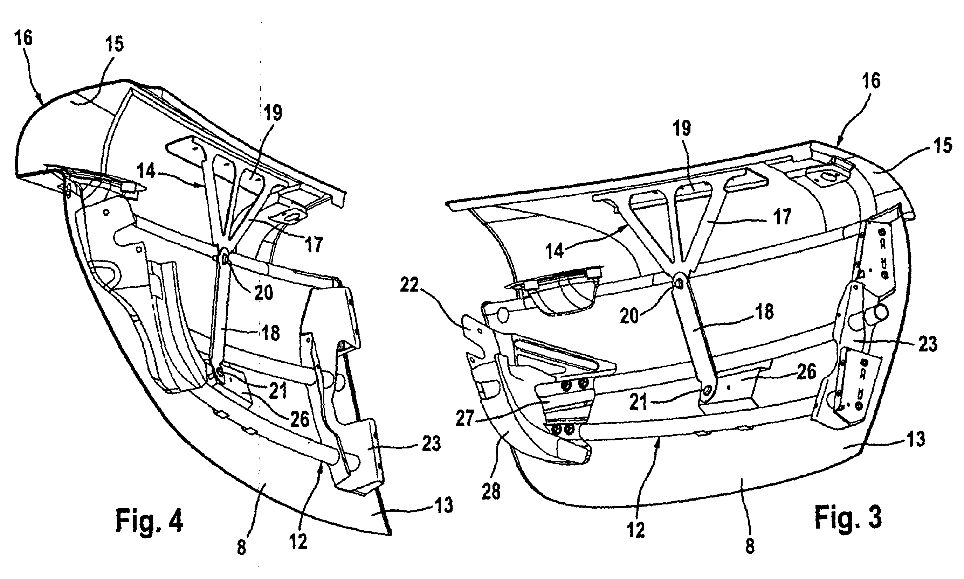

Aus Fig. 3 geht hervor, dass die Konsole 22 auf einer dem Innenteil 7 zugekehrten Seite 27 mit einem Stützelement 28 aus Schaumstoff versehen ist - Fig. 3 -, das bei einer definierten Stoßbeaufschlagung der Aufprallschutzvorrichtung 12 wirksam wird.

Bei einem auf die Tür 1 wirkenden Unfallstoß nimmt die am Innenteil des Türkörpers 6 gehaltene Aufprallschutzvorrichtung 12, die dabei auftretenden Kräfte auf, wodurch vor allem durch Verformarbeit Energie u. a. an den an die Tür 1 angrenzenden Säulen 4 und 5 absorbiert wird. Gleichzeitig wird durch Stützeinrichtung 14 erreicht, dass das Außenteil 8 der Tür 1 aufgrund der Verbindung mit der Aufprallschutzvorrichtung 12 eine Lage beibehält, die eine gezielte Stoßenergieaufnahme unterstützt.

## Patentansprüche

1. Tür für ein Kraftfahrzeug, die in eine Öffnung (2) eines Aufbaus (3) eingesetzt ist und einen sich an aufrechten Säulen (4, 5) des Aufbaus (3) abstützenden Türkörper (6) umfasst, welcher ein Innenteil (7) und ein Außenteil (8) aufweisender Türkörper (6) an die Säulen (4, 5) angrenzende Rahmenteile (9, 10) besitzt, zwischen denen sich eine am Innenteil (7) befestigte, Aufprallschutzvorrichtung (12) ersteckt, **dadurch gekennzeichnet, dass** das mit dem Innenteil (7) verbundene Außenteil (8) mittels einer hieran angebrachten Stützeinrichtung (14) an einer Innenseite (13) zwischen den Rahmen (9 und 10) des Türkörpers (6) mit der Aufprallschutzvorrichtung (12) zusammenwirkt.

2. Tür nach Anspruch 1, **dadurch gekennzeichnet, dass** die Stützeinrichtung (14) von einer Brüstung (16) des Außenteils (8) aus bis zur Aufprallschutzvorrichtung (12) hin verläuft.

3. Tür nach Anspruch 2, **dadurch gekennzeichnet, dass** die Stützeinrichtung (14) eine von der Brüstung (16) weggeführte Stützkonsole (17) und einen zwischen Stützkonsole (17) und Aufprallschutzvorrichtung (12) wirkenden Stützarm (18) aufweist.

4. Tür nach Anspruch 3, **dadurch gekennzeichnet, dass** die Stützkonsole (17) mit einer an der Brüstung (16) anliegenden Abwinkelung (19) versehen ist, wobei die Abwinkelung (19) und die Brüstung (16) durch Kleben miteinander verbunden sind.

5. Tür nach Anspruch 3, **dadurch gekennzeichnet, dass** sich die Stützkonsole (17) zum Stützarm (18) hin keilförmig verjüngt.

6. Tür nach Anspruch 5, **dadurch gekennzeichnet, dass** der Stützarm (18) unter Vermittlung von Schrauben (20 und 21) mit der Stützkonsole (17) verbunden ist.

7. Tür nach Anspruch 1, **dadurch gekennzeichnet, dass** die Aufprallschutzvorrichtung (12) benachbart den Rahmen (9 und 10) des Türkörpers (6) eine erste Konsole (21) und eine zweite Konsole (22) aufweist, wobei sich zwischen den Konsolen (21 und 22) mit Abstand zueinander angeordnete bspw. durch Rohre gebildete Abstützelemente (24 und 25) erstrecken.

8. Tür nach Anspruch 7, **dadurch gekennzeichnet, dass** die Aufprallschutzvorrichtung (12) mittels der Konsolen (22 und 23) an den Rahmen (9 und 10) des Innenteils (7) des Türkörpers (6) befestigt ist.

9. Tür nach Anspruch 7, **dadurch gekennzeichnet, dass** zwischen den Konsolen (22 und 23) der Aufprallschutzvorrichtung (12) die beiden Abstützelemente (24 und 25) mittels einer Halteplatte (26) verbunden sind.

10. Tür nach einem oder mehreren der vorangehenden Ansprüche, **dadurch gekennzeichnet, dass** der Stützarm (18) der Stützeinrichtung (13) an der Halteplatte (26) der Aufprallschutzvorrichtung (12) angreift.

11. Tür nach einem oder mehreren der vorangehenden Ansprüche, **dadurch gekennzeichnet, dass** das Innenteil (7) und das Außenteil (8) des Türkörpers (6) aus hochfestem nichtmetallischem Werkstoff bspw. kohlefaserverstärktem Kunststoff und die Aufprallschutzvorrichtung (12) zumindest Teile davon aus Metall bestehen.

## Claims

1. A door for a motor vehicle, which door is inserted into an opening (2) in a vehicle body (3) and comprises a door body (6) supported on upright pillars (4, 5) of the vehicle body (3), which door body (6) has an inner part (7) and an outer part (8) and frame parts (9, 10) which are adjacent to the pillars (4, 5) and between which extends an impact protection device (12) fixed to the inner part (7), **characterised in that** the outer part (8), which is connected to the inner part (7), co-operates with the impact protection device (12) by means of a supporting device (14) mounted on the outer part (8) on an inner surface (13) between the frames (9 and 10) of the door body (6).

2. A door according to claim 1, **characterised in that** the supporting device (14) extends from a window sill (16) of the outer part (8) to the impact protection device (12).

3. A door according to claim 2, **characterised in that** the supporting device (14) has a supporting bracket (17) extending away from the window sill (16) and a supporting arm (18) acting between the supporting bracket (17) and the impact protection device (12).

4. A door according to claim 3, **characterised in that** the supporting bracket (17) is provided with a return (19) which rests against the window sill (16), wherein the return (19) and the window sill (16) are glued together.

5. A door according to claim 3, **characterised in that** the supporting bracket (17) tapers in the shape of a wedge towards the supporting arm (18).

6. A door according to claim 5, **characterised in that** the supporting arm (18) is connected to the supporting bracket (17) by means of screws (20 and 21).

7. A door according to claim 1, **characterised in that** the impact protection device (12) has a first bracket (21) and a second bracket (22) adjacent to the frames (9 and 10) of the door body (6), wherein supporting members (24 and 25), formed e.g. by tubes, are arranged with mutual spacing and extend between the brackets (21 and 22).

8. A door according to claim 7, **characterised in that** the impact protection device (12) is fixed to the frames (9 and 10) of the inner part (7) of the door body (6) by means of the brackets (22 and 23).

9. A door according to claim 7, **characterised in that** the two supporting members (24 and 25) are connected by means of a holding plate (26) between the brackets (22 and 23) of the impact protection device (12).

10. A door according to one or more of the preceding claims, **characterised in that** the supporting arm (18) of the supporting device (13) engages the holding plate (26) of the impact protection device (12).

11. A door according to one or more of the preceding claims, **characterised in that** the inner part (7) and the outer part (8) of the door body (6) comprise high-strength, non-metallic material, e.g. carbon-fibre-reinforced plastics, and the impact protection device (12) or at least parts thereof comprise metal.

## Revendications

1. Porte pour un véhicule à moteur, montée dans une baie (2) d'une structure (3) et comportant un corps de porte (6) qui s'appuie contre les montants (4, 5) verticaux de la structure (3), lequel corps de porte (6), comportant un élément intérieur 7 et un élément extérieur 8, est muni d'éléments de bâtis (9, 10) attenants aux montants (4, 5), entre lesquels s'étend un dispositif de protection anti-chocs (12) fixé à l'élément intérieur (7), **caractérisée en ce que** l'élément extérieur (8), relié à l'élément intérieur (7) par l'intermédiaire d'un dispositif d'appui (14) assemblé à une face intérieure (13) dudit élément extérieur entre les bâtis (9 et 10) du corps de porte (6), coopère avec le dispositif de protection anti-chocs (12).

2. Porte selon la revendication 1, **caractérisée en ce que** le dispositif d'appui (14) s'étend à partir d'un appui (16) de l'élément extérieur (8) jusqu'au dispositif de protection anti-chocs (12).

3. Porte selon la revendication 2, **caractérisée en ce que** le dispositif d'appui (14) comporte une console de support (17), s'écartant de l'appui (16), et un bras support (18) agissant entre la console de support (17) et le dispositif de protection anti-chocs (12).

4. Porte selon la revendication 3, **caractérisée en ce que** la console de support (17) est munie d'un rebord (19) venant en appui sur l'appui (16), le rebord (19) et l'appui (16) étant assemblés l'un à l'autre par collage.

5. Porte selon la revendication 3, **caractérisée en ce que** la console de support (17) se rétrécit en forme de coin vers le bras support (18).

6. Porte selon la revendication 5, **caractérisée en ce que** le bras support (18) est assemblé à la console de support (17) au moyen de vis (20 et 21).

7. Porte selon la revendication 1, **caractérisée en ce que** le dispositif de protection anti-chocs (12), adjacent aux bâtis (9 et 10) du corps de porte (6), comporte une première console (22) et une deuxième console (23), des éléments d'appui (24 et 25), formés par exemple par des tubes distants l'un de l'autre, s'étendant entre les consoles (22 et 23).

8. Porte selon la revendication 7, **caractérisée en ce que** le dispositif de protection anti-chocs (12) est fixé par l'intermédiaire des consoles (22 et 23) aux bâtis (9 et 10) de l'élément intérieur (7) du corps de porte (6).

9. Porte selon la revendication 7, **caractérisée en ce que** les deux éléments d'appui (24 et 25) entre les consoles (22 et 23) du dispositif de protection anti-chocs (12) sont reliés au moyen d'une plaque de fixation (26).

10. Porte selon une ou plusieurs des revendications précédentes, **caractérisée en ce que** le bras support (18) du dispositif d'appui (13) vient en contact avec la plaque de fixation (26) du dispositif de protection anti-chocs (12).

11. Porte selon une ou plusieurs des revendications précédentes, **caractérisée en ce que** l'élément intérieur (7) et l'élément extérieur (8) du corps de porte (6) sont réalisés dans un matériau non métallique à haute résistance, tel que des matières plastiques renforcées par des fibres de carbone, et le dispositif de protection anti-chocs (12), ou du moins des parties de celui-ci, sont réalisés en métal.
